## Europäisches Patentamt

## European Patent Office

## Office européen des brevets

(11) Veröffentlichungsnummer: **0 186 813**
A2

(12) # EUROPÄISCHE PATENTANMELDUNG

(21) Anmeldenummer: 85115638.0

(22) Anmeldetag: 09.12.85

(51) Int. Cl.⁴: **G 11 B 11/08**, G 11 B 9/10, G 11 B 13/00

(30) Priorität: 22.12.84 DE 3447208

(43) Veröffentlichungstag der Anmeldung: 09.07.86
Patentblatt 86/28

(84) Benannte Vertragsstaaten: BE CH DE FR GB IT LI NL

(71) Anmelder: BAYER AG, Konzernverwaltung RP Patentabteilung, D-5090 Leverkusen 1 Bayerwerk (DE)

(72) Erfinder: Dransfeld, Klaus, Prof. Dr., Immenstall, CH-8272 Ermatingen (CH)

(54) Verfahren zum Auslesen von Informationen aus elektrisch polarisierbaren Datenträgern mittels Elektronenstrahlen.

(57) Die im Datenträger in Form einer örtlich variablen elektrischen Polarisation aufgezeichnete Information wird mit Hilfe eines Elektronenstrahles abgetastet und ausgelesen. Zu diesem Zweck werden die an der Oberfläche des Datenträgers erzeugten Sekundärelektronen ausgenutzt. Gleichzeitig wird der Datenträger entweder durch Einstrahlung elektromagnetischer Wellen periodisch aufgeheizt oder mit Ultraschall beaufschlagt. Dadurch entstehen an der Oberfläche des Datenträgers abhängig von der lokalen Polarisation Potentialschwankungen gleicher Frequenz, die eine Modulation der Sekundärelektronen zur Folge haben. Der Sekundärelektronenstrom erhält also eine Information über die im Datenträger gespeicherten Polarisationszustände. Zur Wiedergewinnung dieser Information wird der Sekundärelektronenstrom frequenzselektiv verstärkt und nach Betrag und/oder Phase elektronisch ausgewertet. Als Datenträger wird bevorzugt eine Polyvinylidenfluorid-Folie (PVDF) verwendet.

BAYER AKTIENGESELLSCHAFT        5090 Leverkusen, Bayerwerk

Konzernverwaltung RP
Patentabteilung        Ki/m-c


Verfahren zum Auslesen von Informationen aus elektrisch
polarisierbaren Datenträgern mittels Elektronenstrahlen

Die Erfindung betrifft ein Verfahren zum Auslesen von Informationen aus einem schichtförmigen, entsprechend den aufgezeichneten Informationen in lokalen Domänen remanent elektrisch polarisierten Datenträger durch Abtastung der polarisierten Domänen mittels Elektronenstrahlen.

Ein wesentliches Entwicklungsziel auf dem Gebiet der Datenverarbeitung sind Informationsspeicher mit hoher Datendichte. Derzeit sind kommerziell im Einsatz stationäre elektrisch löschbare Speicher auf Si-Basis mit Speicherdichten um $10^6$ bit/cm² und bewegliche magnetisch löschbare Speicher (Band, Platte, Trommel) um $10^7$ bit/cm². Gewünscht und dringend gebraucht aber werden Speicher mit wesentlich höheren Speicherdichten als $10^8$ bit/cm².

Neben den konventionellen, weit verbreiteten Halbleiter- und Magnetspeichern wurden bereits verschiedene, auf anderen physikalischen Prinzipien beruhende Verfahren

Le A 23 395 -EP

zur Aufzeichnung und zum Auslesen von Informationen aus Datenspeichern untersucht und beschrieben. So wird bei der mehrdimensionalen Speicherung mittels der Laser-Holographie oder mittels photochemischem Lochbrennen die Information mit einem Laserstrahl in das Speichermedium eingeschrieben. Die Auslesung erfolgt ebenfalls durch einen Laserstrahl. Eine weitere Entwicklungsrichtung befaßt sich mit der Verwendung von Elektronenstrahlen zum Ein- bzw. Auslesen. Der Elektronenstrahl hat gegenüber dem Laser den Vorteil eines erheblich geringeren Strahldurchmessers. Dementsprechend wird eine höhere Ortsauflösung und damit eine höhere Speicherdichte erreicht. Mit dieser Methode wurde in neuerer Zeit ein nicht lösch- und nicht wiedereinschreibbarer Speicher durch Einbrennen winziger Löcher in Aluminium-Folie hergestellt.

In Analogie zum Magnetspeicher, der auf der Magnetisierung ferromagnetischer Domänen beruht, wurden bereits frühzeitig elektrisch polarisierbare Medien auf ihre Eignung als Festkörper-Speicher untersucht. In dem US-Patent 2 698 928 werden mehrere grundlegende Verfahren zum Ein- und Auslesen von Informationen in bzw. aus elektrisch remanent polarisierbaren Datenträgern beschrieben. Das Einlesen erfolgt dadurch, daß ein elektrisch remanent polarisierbarer Datenträger, der mit einer elektrisch leitenden Unterschicht versehen ist, an einer Elektrode vorbeibewegt wird, die mit einer elektrischen Spannung entsprechend der aufzuzeichnenden

Le A 23 395

Information beaufschlagt wird. Alternativ kann die Information auch mit Hilfe von Elektronenstrahlen in das polarisierbare Medium eingeschrieben werden. Auch zum Auslesen kann nach US-PS 2 698 928 ein Elektronenstrahl benutzt werden. Durch den Elektronenstrahl wird hier in dem polarisierten Medium ein so hohes Schaltfeld erzeugt, daß die polarisierten Domänen umgepolt werden. Beim Umpolen entstehen in einem, über Schleifelektroden geschlossenen Stromkreis elektrische Spannungen, die als Auslesesignal detektiert werden. Zusätzlich kann der polarisierte Datenträger mit Ultraschall beaufschlagt werden. Das am Datenträger abgegriffene piezoelektrische Signal ist dann mit der Ultraschallfrequenz moduliert. In diesem Fall kann das Signal-Rauschverhältnis durch frequenzselektive Verstärker verbessert werden.

Diese Art der Auslesung hat den Nachteil, daß der ursprüngliche Polarisationszustand und damit auch die aufgezeichnete Information durch die vom Elektronenstrahl hervorgerufenen relativ hohen Schaltfelder gelöscht wird. Des weiteren läßt die Empfindlichkeit zu wünschen übrig; d.h. es ist schwierig, einen hinreichend großen Signal-Rausch-Abstand zu erzielen.

Ein auf dem Prinzip der Elektronenstrahlaufweitung beruhendes Ausleseverfahren wird in dem US-Patent 4 059 827 beschrieben. Der Datenträger ist hier eine ferroelektrische Polyvinylidenfluorid-Folie. Das Auslesesignal wird dadurch erzeugt, daß die metallisierte Rückschicht des Datenträgers auf einem so hohen negativen Potential

Le A 23 395

gehalten wird, daß der Elektronenstrahl auf eine gitterförmige Kollektorelektrode umgelenkt wird. Ist nun der
Datenträger entsprechend der aufgezeichneten Information elektrisch polarisiert, so erfährt der abgelenkte
Strahl eine seitliche Versetzung bzw. eine Aufweitung,
die von der Größe der Polarisationsladungen abhängt.
Die in Form einer remanenten elektrischen Polarisation
aufgezeichnete Information kann dann an der Kollektorelektrode in Form einer elektrischen Spannung wiedergewonnen werden. Dieses Verfahren hat den Nachteil, daß
der Datenträger nach dem Einschreiben der Information
bis zum Auslesen im Hochvakuum verbleiben muß, da an
der Luft sofort eine Kompensation der Polarisationsladungen erfolgt und damit die Auslesung erschwert
oder sogar unmöglich gemacht wird. Außerdem hängt die
Größe des Auslesesignals stark von der Elektrodengeometrie ab, so daß die räumliche Anordnung der Elektroden
und der Elektronenstrahlkanone sehr kritisch ist. Dies
erfordert eine hohe Präzision bei der Führung des Datenträgers und der Anordnung des Auslesekopfes. Aus diesen
Gründen ist auch eine hohe Störanfälligkeit zu erwarten,
vor allem, wenn das Verfahren im Hinblick auf hohe Empfindlichkeit und hohes laterales Auflösungsvermögen
optimiert wird.

Der vorliegenden Erfindung liegt die Aufgabe zugrunde,
das Elektronenstrahlausleseverfahren bei einem elektrisch
polarisierbaren Datenträger im Hinblick auf das laterale
Auflösungsvermögen und auf die Auslesegeschwindigkeit
zu verbessern. Insbesondere soll ein Auflösungsvermögen

Le A 23 395

$\leq$ 1 µm und eine Datenübertragungsrate $\geq 10^6$ bit/s beim Auslesen erreicht werden. Außerdem soll bei dem Verfahren von vornherein ein hohes Signal- zu Rauschverhältnis gewährleistet sein.

Diese Aufgabe wird erfindungsgemäß durch folgende Schritte gelöst:

a) Die auszulesenden Bereiche werden periodisch (Aktivierungsfrequenz $\omega$) durch Einstrahlung elektromagnetischer Wellen aufgeheizt oder mit Ultraschall beaufschlagt.

b) Die an den Auslesebereichen reflektierten bzw. gestreuten Sekundärelektroden werden mit einem Multiplier erfaßt.

c) Die am Multiplier auftretende Wechselspannung wird frequenzselektiv verstärkt und nach Betrag und/oder Phasenlage in bezug auf die Aktivierungsfrequenz $\omega$ ausgewertet.

Durch Einstrahlung elektromagnetischer Wellen, z.B. Infrarot, die mit der Frequenz $\omega$ moduliert sind, wird der Datenträger im Takt der Modulationsfrequenz oberflächlich aufgeheizt. Die Wellenlänge wird zweckmäßig im Bereich einer Absorptionsbande des Datenträgermaterials gewählt, so daß die Eindringtiefe der Strahlung gering ist und die Erwärmung nur an der Oberfläche stattfindet. Die zur Aufheizung verwendete Lichtquelle, z.B.

Le A 23 395

ein Festkörperlaser mit HF-Modulation wird mit einer Frequenz < 100 MHz moduliert. Dadurch werden an der Oberfläche der Auslesebereiche, abhängig von der lokalen Polarisation, Potentialschwankungen gleicher Frequenz erzeugt, die ihrerseits eine Modulation der Sekundärelektronen zur Folge haben. Der Sekundärelektronenstrom enthält also eine Information über die im Datenträger gespeicherten Polarisationszustände. Bei dieser Art der Auslesung handelt es sich um eine pyroelektrische Aktivierung der polarisierten Domänen.

Alternativ können die polarisierten Domänen auch piezoelektrisch aktiviert werden. Zu diesem Zweck wird der Datenträger zweckmäßig über eine auf ihm aufgebrachte piezoelektrisch aktive Schicht mit Ultraschall beaufschlagt. Die Ultraschallfrequenz liegt dabei vorteilhaft im Bereich von 0,5 bis 5 GHz, vorzugsweise 0,5 - 2 GHz.

Die für den Auslesevorgang wesentlichen Sekundärelektronen werden durch einen auf den Datenträger gerichteten Primärelektronenstrahl mit einer Energie von wenigen kV erzeugt.

Es hat sich herausgestellt, daß der Sekundärelektronennachweis eine hochempfindliche Sonde darstellt, die es gestattet, hochfrequente Potentialschwankungen von wenigen mV an der Oberfläche des Datenträgers festzustellen. Aufgrund der frequenzselektiven Verstärkung wird nur der HF-modulierte Anteil der Sekundärelektro-

Le A 23 395

nen verstärkt und mit einem günstigen Signal-Rausch-Verhältnis zur Anzeige gebracht. Die Ortsauflösung beim Auslesen ist durch den Querschnitt des Primärelektronenstrahles bestimmt. Bei optimaler Justierung kann ein laterales Auflösungsvermögen von $\leq 1$ µm erreicht werden. Damit ist im Prinzip die Voraussetzung geschaffen, daß bei polarisierbaren Datenträgern Informationen mit einer Speicherdichte $\geq 10^8$ bit/cm² ausgelesen werden können.

Weitere wichtige Kenngrößen bei einem Datenspeicher sind die Zugriffszeit, die Datenübertragungsrate und die Lebensdauer der gespeicherten Informationen. Um die geforderte hohe Datenübertragungsrate problemlos erreichen zu können, muß die Modulationsfrequenz mindestens eine Größenordnung über der Datenübertragungsrate liegen. Bei einer Datenübertragungsrate von $10^6$ bit/s ist dies mit Sicherheit bei einer Ultraschallfrequenz von 1 GHz und bei einer Laser-Modulationsfrequenz von 10 MHz gewährleistet.

Gegenüber den bekannten Methoden der Elektronenstrahlauslesung, die zu einer Umpolung der polarisierten Bereiche führen (siehe z.B. US 2 698 928), hat das erfindungsgemäße Verfahren den Vorteil, daß die Wechselwirkung des Elektronenstrahles mit dem Datenträger so gering ist, daß der Polarisationszustand des Datenträgers auch bei wiederholtem Auslesen nicht verändert wird. Der Auslesevorgang ist stets reversibel.

Im folgenden wird die Erfindung anhand von Ausführungsbeispielen und Zeichnungen näher beschrieben.

Le A 23 395

Es zeigen

Fig. 1    eine prinzipielle Anordnung für die Auslesung
         mittels Elektronenstrahlen bei pyroelektrischer Aktivierung der polarisierten Domänen
         und

Fig. 2    eine Anordnung für die Elektronenstrahlauslesung bei piezoelektrischer Anregung des
         Datenträgers.

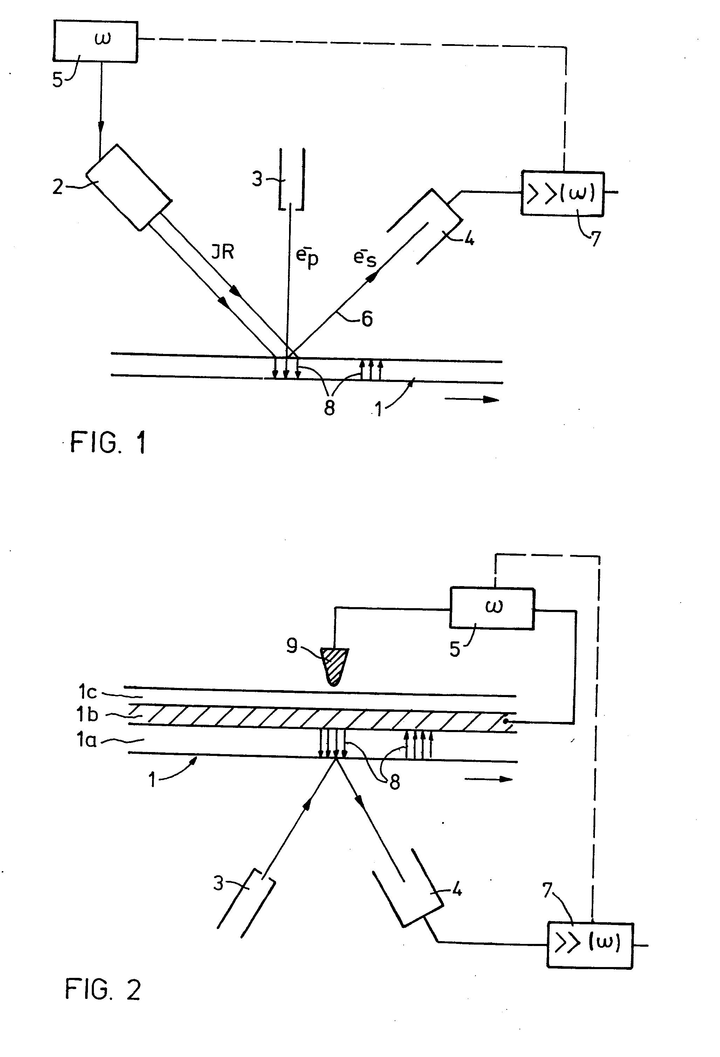

Gemäß Fig. 1 wird der schichtförmige Datenträger 1 an
einem feststehenden Lesekopf 2, 3, 4 vorbeibewegt. Der
schichtförmige Datenträger besteht aus einer mehrere
µm-dicken, geeigneten ferroelektrischen Folie, z.B.
einer Polyvinylidenfluorid-Folie (PVDF). Der Lesekopf
besteht im wesentlichen aus einem IR-Laser 2, einer
Elektronenstrahlkanone 3 und einem Multiplier 4 zum
Nachweis von Sekundärelektronen, wobei diese Elemente
alle auf derselben Seite angeordnet sind.

Die PVDF-Schicht 1a enthält die gespeicherte Information
in Form von zeitstabilen elektrisch polarisierten Domänen. Das Einlesen erfolgt in bekannter Weise dadurch,
daß das Signalfeld, z.B. mittels einer Spitze oder
mittels Elektronenstrahl auf den bewegten Datenträger
aufgeprägt wird (Einlesen mit Spitze siehe US-PS
2 698 928 und H. Niitsuma und R. Sato, Ferroelectric
Recording using the pyroelectric Reproduction Technique,
Ferroelectrics, 34 (1981), pages 37 - 45). Die einge-

Le A 23 395

schriebene remanente Polarisation wird allerdings durch freie Ladungsträger (Elektronen und Löcher) abgeschirmt, so daß an der Oberfläche der PVDF-Schicht allenfalls ein sehr geringes elektrisches Feld übrigbleibt. Aus diesem Grunde muß eine rasche Störung des Systems durchgeführt werden, welche die abschirmende Wirkung der trägen Kompensationsladungen vorübergehend aufhebt und dadurch ein nachweisbares Signalfeld erzeugt. Zu diesem Zweck wird beim Auslesevorgang die PVDF-Schicht pyroelektrisch aktiviert. Die pyroelektrische Aktivierung erfolgt hier durch einen Laserstrahl (Laser 2), der in einem räumlich begrenzten Bereich auf die Oberfläche des Datenträgers 1 trifft. Da die räumliche (laterale) Auflösung des Verfahrens allein durch den Elektronenstrahl definiert ist, kann die pyroelektrische Aktivierung auf einer relativ breiten Fläche des Datenträgers erfolgen. Der Laser wird hochfrequent (HF-Generator 5) moduliert. Durch den Laserstrahl wird die Oberfläche des Datenträgers 1 im Takt der Modulationsfrequenz $\omega$ aufgeheizt. Das dadurch hervorgerufene Signalfeld wird durch eine spezielle Elektronensonde detektiert, die nachfolgend näher beschrieben wird. Die Elektronensonde besteht aus einer Elektronenkanone 3 und erzeugt einen Primärelektronenstrahl mit einer Energie von 1,5 bis 2,5 kV, der auf die Oberfläche der PVDF-Schicht gerichtet ist. Trifft der Primärelektronenstrahl auf eine Domäne 8, die, wie oben beschrieben, pyroelektrisch aktiviert wird, so erfährt der Primärelektronenstrahl eine Wechselwirkung mit den durch die Aktivierung erzeugten Oberflächenladungen im Rhythmus der Modulations-

Le A 23 395

0186813

frequenz $\omega$. Mit einem Auffänger 4, der in der Nähe der PVDF-Schicht 1 angeordnet ist, kann man Streu- oder Sekundär-Elektronen nachweisen, die an der Oberfläche gestreut bzw. emittiert werden. Der Auffänger 4, der in der Praxis aus einem Multiplier besteht, ist mit einem hochempfindlichen schmalbandigen Verstärker 7 verbunden, der auf die Frquenz $\omega$ abgestimmt ist. Auf diese Weise werden empfängerseitig nur diejenigen Elektronen nachgewiesen, die durch das Signalfeld der PVDF-Schicht beeinflußt werden. Andererseits ist die Wechselwirkung des Primärelektronenstrahles mit den polarisierten Domänen 8 so schwach, daß der Polarisationszustand nicht geändert wird. Die gespeicherte Information bleibt unverändert erhalten.

Das verstärkte Auslesesignal wird einer Auswerteschaltung zugeführt, die einen Phasenvergleich bezüglich des HF-Generators und/oder eine Amplitudendiskriminierung durchführt. Trifft der Primärelektronenstrahl, z.B. nacheinander auf die entgegengesetzt polarisierten Domänen 8, so wechselt das Auslesesignal sein Vorzeichen (Phasensprung von 180°). Diese Tatsache kann zum Auslesen einer binär codierten Information benutzt werden. Besteht dagegen die aufgezeichnete Information aus polarisierten Bereichen gleicher Richtung, aber unterschiedlichen Beträgen der Polarisation, so ist eine Analog-Auslesung möglich, indem nur die Amplituden des Auslesesignales ausgewertet werden.

Die Elektronenstrahlauslesung muß natürlich unter Hochvakuum erfolgen. Aus diesem Grund ist der Datenträger 1,

Le A 23 395

der Laser 2, die Elektronenstrahlkanone 3 und der Multiplier 4 in einer Hochvakuumapparatur untergebracht.

Gemäß Fig. 2 wird die abschirmende Wirkung der Kompensationsladungen an der Oberfläche des Datenträgers 1 durch eine piezoelektrische Aktivierung vorübergehend aufgehoben. Im Gegensatz zu dem vorbeschriebenen Ausführungsbeispiel ist der Datenträger 1 hier aus 3 Schichten, 1a, 1b, 1c, aufgebaut. Die erste Schicht 1a ist die aus einer ferroelektrischen Folie, z.B. einer PVDF-Folie bestehende Speicherschicht. Die zweite Schicht 1b ist eine aufgedampfte Aluminiumschicht zur Abschirmung der PVDF-Folie 1a. Die dritte Schicht 1c ist eine piezoelektrisch aktive Schicht und besteht z.B. aus Zinkoxid oder ebenfalls aus gepoltem Polyvinylidenfluorid. Sie dient zur Erzeugung des Ultraschallwellenfeldes, um die polarisierten Domänen 8 in der PVDF-Schicht 1a zu aktivieren. An der Oberseite der Piezoschicht 1c ist in geringem Abstand eine Metallelektrode in Form einer Spitze 9 angeordnet. Durch Anlegen einer hochfrequenten Wechselspannung (UHF-Generator 5) an die Spitze 9 und die metallische Zwischenschicht 1b wird die Piezoschicht 1c im Bereich der Spitze 9 zu Ultraschallschwingungen angeregt, die an die darunterliegenden Schichten 1b und 1a weitergegeben werden. Dadurch werden die polarisierten Domänen 8, wie oben erläutert, aktiviert und die resultierenden Signalfelder können mit der nachfolgend beschriebenen Elektronenstrahlsonde 3, 4 nachgewiesen werden.

Le A 23 395

Die Beschallung des Datenträgers 1 kann auch ohne die piezoelektrische Deckschicht 1c erfolgen. In diesem Fall werden die Ultraschallwellen durch die zwischen der Spitze 9 und der Metallschicht 1b auftretenden elektrostatischen Kräfte erzeugt. Die Modulationsfrequenz beträgt dann 2 $\omega$.

Bei den Anordnungen gemäß Fig. 1 und Fig. 2 kann die Signalempfindlichkeit verbessert werden, wenn zwischen dem Multiplier 4 und der PVDF-Schicht in bekannter Weise eine Elektronenoptik eingebaut wird, um möglichst alle Sekundärelektronen abzuziehen.

Die Elektronenstrahlsonde 3,4 kann im Prinzip ähnlich aufgebaut sein, wie bei den bekannten Rasterelektronenmikroskopen, d.h. man kann bei der Realisierung des erfindungsgemäßen Verfahrens im großen und ganzen auf bekannte Technologien zurückgreifen.

Das erfindungsgemäße Verfahren zeichnet sich aus durch einen günstigen Störabstand (hohe Signalempfindlichkeit), durch ein hohes laterales Auflösungsvermögen (bedingt durch den minimalen Querschnitt des Primärelektronenstrahls) und durch eine hohe Auslesegeschwindigkeit. Im Hinblick auf eine hohe Auslesegeschwindigkeit ist es günstig, wenn die Ultraschallfrequenz so hoch wie möglich gewählt wird. Eine Grenze wird lediglich gesetzt durch Raumladungs- und Elektronenlaufzeiteffekte zwischen dem Multiplier 4 und der Datenträgeroberfläche.

Le A 23 395

0186813

Bei weiteren, von Fig. 1, respektive Fig. 2 abgeleiteten Varianten des Verfahrens wird mit einem feststehenden Datenträger 1 gearbeitet und der Elektronenstrahl senkrecht zur Papierebene in Fig. 1, respektive Fig. 2 gescannt. Außerdem kann in Fig. 2 die Spitze 9 durch eine in Scann-Richtung aufgedampfte Streifenelektrode ersetzt werden. Es leuchtet ein, daß bei dieser Variante der mechanische Aufwand geringer ist (Wegfall der Bandtransportvorrichtung).

Le A 23 395

Patentansprüche:

1. Verfahren zum Auslesen von Informationen aus einem schichtförmigen, entsprechend den aufgezeichneten Informationen in lokalen Domänen remanent polarisierten Datenträger durch Abtastung der polarisierten Domänen mittels Elektronenstrahlen, dadurch gekennzeichnet,

   a) daß die auszulesenden Bereiche periodisch (Aktivierungsfrequenz $\omega$) durch Einstrahlung elektromagnetischer Wellen aufgeheizt oder mit Ultraschall beaufschlagt werden,

   b) daß die von den Auslesebereichen emittierten Sekundärelektronen mit einem Multiplier erfaßt werden und

   c) daß die am Multiplier auftretende Wechselspannung frequenzselektiv verstärkt (Frequenz $\omega$) und nach Betrag und/oder Phasenlage in bezug auf die Aktivierungsfrequenz ausgewertet wird.

2. Verfahren nach Anspruch 1, dadurch gekennzeichnet, daß die auszulesenden Bereiche durch einen gepulsten IR-Laser (Modulationsfrequenz $\omega$) aktiviert werden.

Le A 23 395

3. Verfahren nach Anspruch 1, dadurch gekennzeichnet, daß der Datenträger durch eine mit ihm verbundene piezoelektrisch aktive Schicht in einem eng begrenzten Bereich mittels einer aufgesetzten oder unmittelbar davor angeordneten Metallspitze oder mittels auf der Piezoschicht aufgedampfter Elektroden beschallt wird.

4. Verfahren nach Anspruch 1, dadurch gekennzeichnet, daß der Datenträger durch ein von außen mittels einer Spitzenelektrode aufgeprägtes elektrisches Wechselfeld mit Ultraschall beaufschlagt wird.

5. Verfahren nach Anspruch 1 bis 4, dadurch gekennzeichnet, daß die Sekundärelektronen durch ein Ziehfeld erfaßt und auf den Multiplier fokussiert werden.

6. Verfahren nach den Ansprüchen 3 bis 5, dadurch gekennzeichnet, daß mit einer Ultraschallfrequenz im Bereich von 0,5 - 5 GHz, vorzugsweise 0,5 - 2 GHz, und mit Primärelektronen in einem Energiebereich von 1 - 5 kV, vorzugsweise 1,5 - 2,5 kV, gearbeitet wird.

Le A 23 395

FIG. 1

FIG. 2